# EUROPEAN PATENT SPECIFICATION

(11) **EP 4 497 666 B1**
(45) Date of publication and mention of the grant of the patent: **18.03.2026**
(21) Application number: 24190785.6
(22) Date of filing: 25.07.2024
(51) Int. Cl.: B62H 5/04, B62K 5/01, B62K 5/08

(54) **BLOCKING SYSTEM FOR BLOCKING THE STEERING COLUMN OF A QUAD**
BLOCKIERSYSTEM ZUM BLOCKIEREN DER LENKSÄULE EINES QUAD
SYSTÈME DE BLOCAGE POUR BLOQUER LA COLONNE DE DIRECTION D'UN QUAD

(30) Priority: 28.07.2023 IT 202300015963
(43) Date of publication of application: 29.01.2025
(73) Proprietor: Sannelli, Gerardo, 74013 Ginosa (TA) (IT); Calabria, Angelery, 74013 Ginosa (TA) (IT)
(72) Inventor: Sannelli, Gerardo, 74013 Ginosa (TA) (IT); Calabria, Angelery, 74013 Ginosa (TA) (IT)
(74) Representative: Ferriero, Paolo

(56) References cited:
- EP-B1- 1 857 335
- WO-A1-2014/040579
- CN-U- 206 954 352
- CN-U- 210 912 689
- JP-U- H0 364 189

## Description

The present invention relates to a blocking system for blocking the steering column of a quad.

In particular, the present invention relates to a structure of a mechanical blocking system comprising a plurality of elements: a first element to be positioned around a portion of the steering column, a second element couplable to a portion of a handlebars of the quad, a coupling element for rigidly coupling said first element to a frame portion of the quad and a blocking device to block said second element to said first element in such a way that said second element and said first element are constrained to each other
In other words, when the blocking system is in use, the coupling element rigidly constrains the first element to the frame portion of the quad, so that said first element is blocked in position with respect to said frame portion, and the blocking device constrains the second element (connected to the handlebars) to the first element of the blocking system, so that the rotation of said second element with respect to said first element is prevented.

The structure of the blocking system is designed to avoid making modifications to the quad and position the blocking system easily around a portion of the steering column of said quad.

### Prior art

Various locking devices are currently known for blocking the steering column of a scooter or a car, such as for example a chain for tying the wheel of a scooter to a pole or to a further element fixed to a floor or a jaw (in general having the shape of a disc) to be applied to a car wheel.

However, there are no known locking devices designed to block the steering column of a quad.

The document EP 1 857 335 B1 discloses the features of the preamble of claim 1.

### Aim of the invention

The aim of the present invention is to provide a blocking system for blocking the steering column of a quad which is reliable in terms of safety and therefore difficult to tamper with by a thief who would like to break said blocking system to steal the quad.

A second aim of the present invention is to provide a blocking system having a simple mechanical structure and a low manufacturing cost.

A further aim of the present invention is to provide a blocking system which has a reduced bulk.

### Object of the invention

It is therefore object of the invention a blocking system for blocking a steering column of a quad, comprising:
- a first element shaped to surround a portion of said steering column, wherein said first element comprises a main body comprising:
   a cavity for receiving a portion of said steering column of said quad,
   a slot extending along a first surface of said main body to allow said portion of said steering column to be inserted said cavity, and
   a protrusion protruding from a second surface of said main body,
   different from said first surface, wherein said protrusion is provided of a first opening,
- a second element couplable to a portion of a handlebars of said quad, wherein said second element comprises a first portion provided with a second opening,
- a coupling element for rigidly coupling said first element with a frame portion of said quad, so that said first element is blocked in position with respect to said frame portion,
- a blocking device for blocking said second element to said first element, wherein said blocking device comprises:
   a body,
   a pin extending outwards from an end surface of said body and is shaped to be inserted into said first opening of said first element and into said second opening of said second element, wherein said pin has a longitudinal axis and comprises at least one first tooth integral with said pin, and is rotable around said longitudinal axis with respect to said body in such a way that said first tooth rotates between a first position, in which said pin is inserted into said first opening of said first element and into said second opening of said second element but said first tooth does not block said second element to said first element, and a second position, wherein said pin is inserted into said first opening of said first element and into said second opening of said second element and said first tooth blocks said second element to said first element.

Preferred embodiments are described in the dependent claims.

### Attached Figure List

The present invention will be now described, for illustrative, but not limitative purposes, according to its embodiments, making particular reference to the enclosed figures, wherein:
Figure 1 is a first exploded view of a first embodiment of the blocking system, according to the invention, for blocking the steering column of a quad, comprising a first element, arranged around a portion of the steering column of the quad, a second element couplable to a portion of a handlebars of the quad, a coupling element for rigidly coupling said first element to a frame portion of the quad, as well as a blocking device for blocking said second element to said first element;
Figure 2 is a first exploded view of the blocking system of Figure 1;
Figure 3 is a first view of the blocking system of Figure 1 wherein said blocking system is assembled;
Figure 4 is a second view of the blocking system of Figure 1 wherein said blocking system is assembled;
Figure 5 is a view of the blocking system applied on a portion of the steering column of the quad which shows the coupling element which rigidly couples said first element of the blocking system to a frame portion of the quad
Figure 6 is a view of the blocking system applied on a portion of the steering column of the quad which shows the first element and the second element of the blocking system, wherein said first element is coupled to a frame portion of the quad and said second element is coupled to a portion of a handlebars of the quad, and the blocking device is ready to block said second element to said first element;
Figure 7 is a partial view of the blocking system applied on a portion of the steering column, wherein the blocking device has a pin inserted into a first opening of the first element and into a second opening of the second element but does not block the second element to first element;
Figure 8 is a partial view of the blocking system applied on a portion of the steering column, wherein the blocking device has a pin inserted into a first opening of the first element and into a second opening of the second element and blocks the second element to the first element;
Figure 9 is a further partial view of the blocking system applied on a portion of the steering column, wherein the blocking device blocks the second element to the first element;
Figure 10 is a partial view of the blocking system applied on a portion of the steering column, wherein the blocking device has been removed and the second element is slightly rotated with respect to the first element since said second element is no longer blocked to the first element through the blocking device;
Figure 11 is a first exploded view of a second embodiment of the blocking system, according to the invention;
Figure 12 is a second exploded view of the blocking system of Figure 11;
Figure 13 is a view of the blocking system of Figure 11 wherein said blocking system is assembled;
Figure 14 is a perspective view of a variant of the blocking device, wherein the body of the blocking device has a bell shape;
Figure 15 is a perspective view from above of the blocking device shown in Figure 14.

### Detailed description of the invention

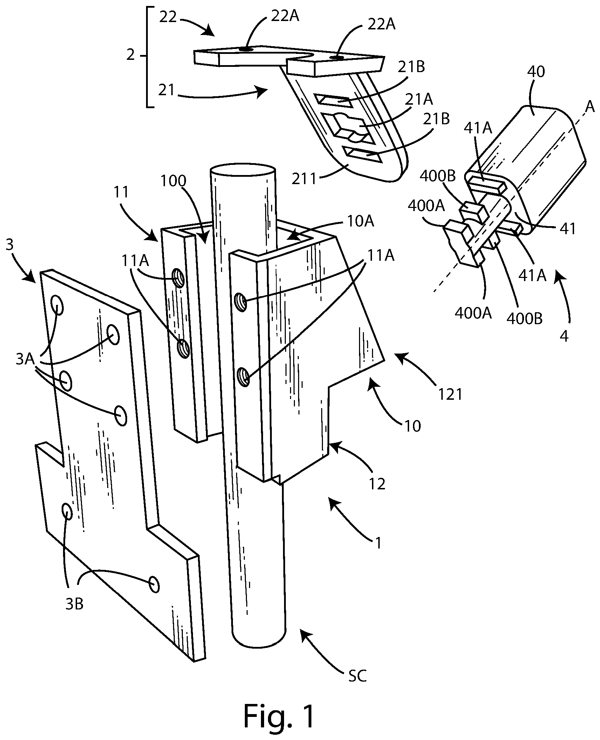

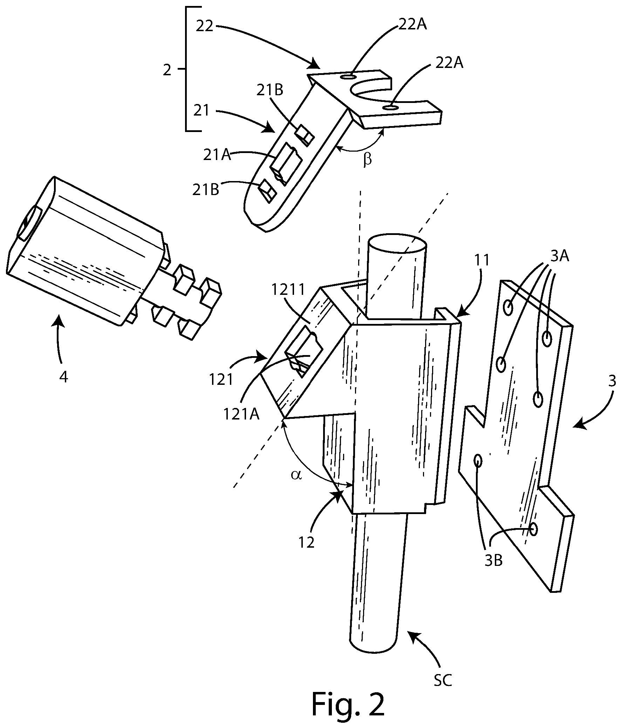

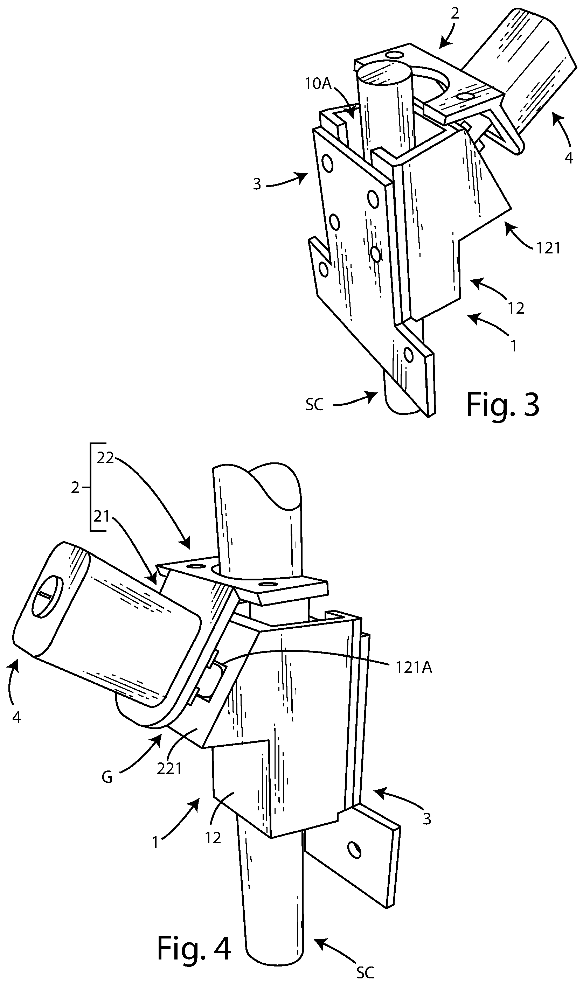

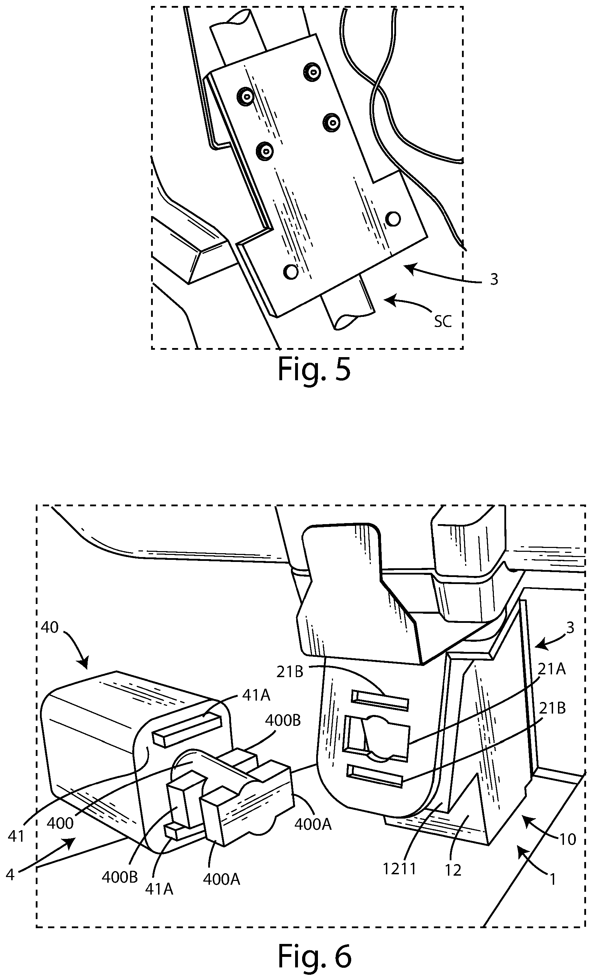

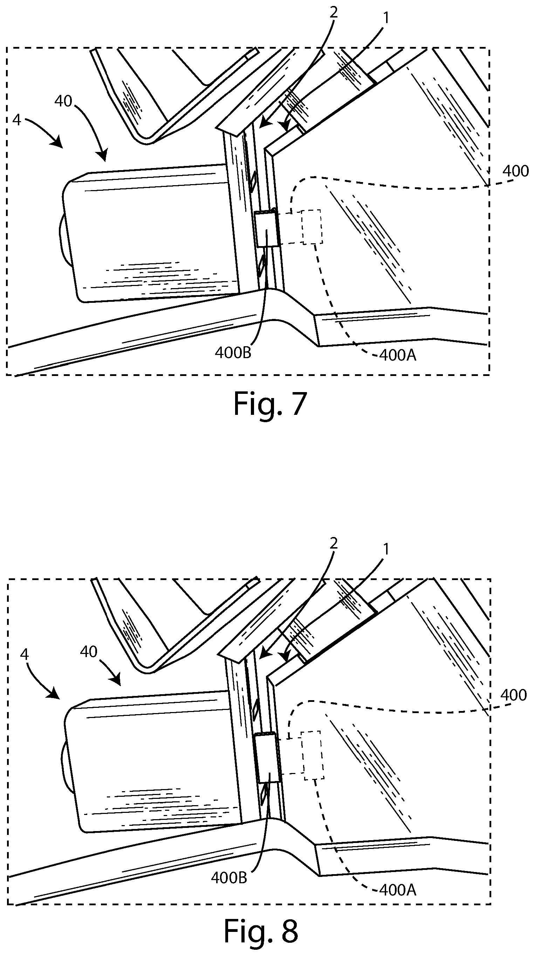

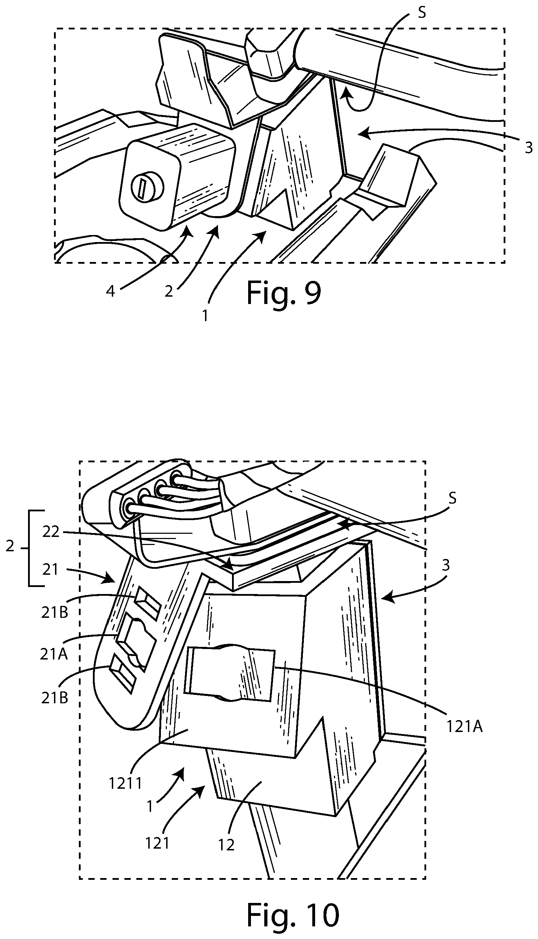

With reference to Figures 1 to 10, a first embodiment of a blocking system for blocking the steering column SC of a quad is described.

Said blocking system comprises:
- a first element 1 shaped to surround a portion of said steering column SC,
- a second element 2 couplable to a portion of a handlebars S of said quad,
- a coupling element 3 for rigidly coupling said first element 1 with a frame portion of said quad, so that said first element 1 is blocked in position with respect to said frame portion, and
- a blocking device 4 for blocking said second element 2 to said first element 1.

With reference to the first element 1 of the blocking system, said blocking system 1 comprises a main body 10 which in turn comprises:
a cavity 10A for receiving a portion of said steering column SC of said quad,
a slot 100 extending along a first surface 11 of said main body 10 to allow said portion of said steering column SC to be inserted said cavity 10A, and
a protrusion 121 protruding from a second surface 12 of said main body 10, different from said first surface 11, wherein said protrusion 121 is provided with a first opening 121A.

With reference to the main body 10, said main body 10 is substantially a hollow tubular body.

The slot 100 is arranged on the first surface 11 of the main body 10 to allow the passage of a portion of the steering column SC inside said main body 10.

In other words, the slot 100 extends along the entire first surface 11 of said main body 10, so as to divide said first surface 11 into two parts: a first part and a second part spaced apart from each other.

A plurality of through holes 11A is arranged on said first surface 11.

Each through hole 11A of said plurality of through holes 11A allows the insertion of a respective security pin (not shown) to also be inserted into a respective through hole 3A of the coupling element 3 described in detail below.

In other words, the first element 1 and the coupling element 3 are coupled to each other through said security pins, each of which is inserted into a respective through hole 3A of the third element as well as into a respective through hole 11A of the first element 1.

In particular, each through hole 11A is a threaded hole and each security pin comprises a threaded end portion to be screwed on said threaded hole.

It is preferably that each security pin further comprises a head detachable from said threaded end portion.

In other words, after having inserted a security pin into the through hole 3A of the coupling element 3 and screwed said security pin on a respective through hole 11A of the first element 1, it is possible to manually remove the head of said security pin, so as to prevent a criminal to easily decouple said first element 1 from the coupling element 3.

At least two through holes 11A are arranged on the first surface 11 of the main body 10, in particular a through hole 11A for each part of the first surface 11.

In the first embodiment that is described, four through holes 11A are arranged on the first surface 11, two through holes for each part of the first surface 11.

In the first embodiment that is described, the second surface 12 of the main body 10 is opposite to the first surface 11 mentioned above.

The first opening 121A serves to receive a pin 400 of a blocking device 4 described in detail below.

As mentioned, the first opening 121A is formed in said protrusion 121.

In the first embodiment that is described, the protrusion 121 is a single piece with the main body 10.

However, it is not necessary that said protrusion 121 is a single piece with said main body 10.

In the first embodiment that is described, the first opening 121 is arranged on a surface 1211 of said protrusion 121 and said surface 1211 is arranged on a first plane forming a first angle (α) greater than 0° and less than 90° with a second plane on which said second surface 12 is arranged.

In other words, the surface 1211 of the protrusion 121 on which the first opening 121A is formed is inclined with respect to the second surface 12 on which said protrusion 121 is arranged.

With reference to the second element 2 of the blocking system, said second element 2 comprises a first portion 21 provided with a second opening 21A.

Said second opening 21A serves to receive a pin 400 of the blocking device 4 mentioned above.

In other words, the pin 400 of the blocking device 4 is to be inserted in the first opening 121A of the first element 1 and in the second opening 21A of the second element 2 in order to block the first element 1 and the second element 2 together.

Furthermore, the first portion 21 of the second element 2 is provided with at least one further slot 21B for the insertion of a respective relief 41A of the blocking device 4 mentioned above.

In the first embodiment that is described, said first portion 21 is provided with two further slots 21B, each of which allows the insertion of a respective relief 41A of the blocking device 4.

In particular, said two further slots 21B are spaced apart from each other and said second opening 21A is arranged on said first portion 21 between said two further slots 21B.

Advantageously, each further slot 21B on the second element 2 also serves as a guide for the correct positioning of the blocking device 4.

In the first embodiment that is described, the first opening 121A of the first element 1 and the second opening 21A of the second element 2 have the same shape and size.

However, it is not necessary for said first opening 121A and said second opening 21A to have the same shape and size.

Furthermore, said second element 2 comprises a second portion 22 intended to contact a portion of the handlebars S.

In order to couple the second element 2 to the portion of the handlebar S, said second element 2 is provided with at least one through hole 22A for the passage of a pin (not shown) comprising a threaded end portion.

This pin is one of the pins with which the quad is provided.

A security nut comprising a threaded end portion is screwed on said pin to block the second element 2 to said portion of said handlebars S.

It is preferable that the security nut has a head detachable from said threaded end portion.

In this way, after having screwed said security nut on said pin, it is possible to manually remove the head of said security nut, so as to prevent a criminal from easily decoupling said second element 2 from the handlebars S.

In the first embodiment that is described, in order to couple the second element 2 to the portion of the handlebars S, said second element 2 is provided with two through holes 22A for the passage of a respective pin of the quad.

Furthermore, in the embodiment that is described, said first portion 21 is inclined with respect to said second portion 22.

When the blocking system is in use, said first portion 21 is parallel or substantially parallel to the surface 1211 of the protrusion 121 of the first element 1, in such a way that the second opening 21A arranged on the first portion 21 of the second element 2 is parallel or substantially parallel to the first opening 121A of the first element 1.

In particular, said first portion 21 forms a second angle β with said second portion 22 greater than 90° and less than 180°.

With reference to the coupling element 3, said coupling element 3 allows the first element 1 to be coupled to a frame portion of the quad, in such a way that the first element 1 is blocked in position with respect to said frame portion.

In the first embodiment that is described, said coupling element 3 is a plate.

Said coupling element 3 is provided with a plurality of through holes 3A.

As already mentioned, the through holes 3A of said plurality of through holes 3A are arranged in such a way that, when the blocking system is in use, each through hole 3A of said plurality of through holes 3A is overlayed on a respective threaded through hole 11A of the first surface 11 of the first element 1.

Said blocking system comprises a plurality of security pins to fix said coupling element 3 to said first element 1.

Each security pin is to be inserted into a respective pair of holes formed by a through hole 3A arranged on the coupling element 3 and by a threaded through hole 11A arranged on the first surface 11 of the first element 1.

As already mentioned, each security pin preferably comprises a head detachable from a threaded end portion.

Advantageously, after having inserted a respective security pin into a through hole 3A of the coupling element 3 and screwed said security pin on a threaded through hole 11A of the first element 1, it is possible to manually remove the head of said security pin.

Said plurality of through holes 3A comprises at least two through holes 3A.

In the first embodiment that is described, said plurality of through holes 3A comprises four through holes 3A.

Said four through holes 3A are arranged on the coupling element 3 in such a way that each of said through holes 3A of the coupling element 3 is overlayed on a respective threaded through hole 11A arranged on the first element 1, when said coupling element 3 is coupled to said first element 1 and to said frame portion of the quad.

Furthermore, said coupling element 3 is provided with at least one further through hole 3B.

In order to couple the coupling element 3 to a frame portion of the quad, said coupling element 3 is provided with said at least one further through hole 3B for the passage of a further pin (not shown) comprising a threaded end portion .

Said further pin is one of the pins with which the quad is provided.

A further security nut comprising a threaded end portion is screwed on said further pin to block said coupling element 3 to said frame portion.

It is preferable that said further security nut ha a head detachable from said threaded end portion.

In this way, after having screwed said further security nut on said further pin, it is possible to manually remove the head of said further security nut, so as to prevent a criminal from easily decoupling said coupling element 3 from the frame of the quad.

In the first embodiment that is described, in order to couple the coupling element 3 to a frame portion, said coupling element 3 is provided with two further through holes 3B for the passage of a respective further pin of the quad.

With reference to the blocking device 4, said blocking device 4 comprises:
a body 40,
a pin 400 extending outwards from an end surface 41 of said body 40 and is shaped to be inserted into said first opening 121A of said first element 1 and into said second opening 21A of said second element, wherein said pin 400 has a longitudinal axis A and comprises at least one first tooth 400A integral with said pin 400, and is rotable around said longitudinal axis A with respect to said body 40 in such a way that said first tooth 400A rotates between a first position, in which said pin 400 is inserted into said first opening 121A of said first element 1 and into said second opening 21A of said second element 2 but said first tooth 400A does not block said second element 2 to said first element 1, and a second position, in which said pin 400 is inserted into said first opening 121A of said first element 1 and into said second opening 21A of said second element 2 and said first tooth 400A blocks said second element 2 to said first element 1.

It is preferable that the rotation angle of said pin 400 is equal to 90°.

Consequently, when the pin 400 is in its second position it is rotated by a rotation angle equal to 90° with respect to its first position.

However, the rotation angle can have any value greater than 0° and less than 180°, without departing from the scope of the invention.

In the first embodiment that is described, said pin 400 comprises two first teeth 400A, i.e. a pair of first teeth 400A.

The two first teeth 400A of said pair of first teeth 400A are aligned along an axis perpendicular or substantially perpendicular to the longitudinal axis A of the pin 400.

The end surface 41 of the body 40 of said blocking device 4 is provided with at least one relief 41A shaped to be inserted in said further slot 21B arranged on the first portion 21 of the second element 2.

Since, as said above, in the first embodiment that is described, the first portion 21 of the second element 2 is provided with two further slots 21B, the end surface 41 of the blocking device 4 is provided with two reliefs 41A, spaced each other, each of which is shaped to be inserted into a respective further slot 21B of the second element 2.

In particular, in the embodiment that is described, the pin 400 comprises an end arranged on said end surface between said two reliefs 41A.

Furthermore, the pin 400 comprises at least one second tooth 400B, integral with said pin 400, and said second tooth 400B is arranged between said end surface 41 and said first tooth 400A.

When said blocking system is in use, said second tooth 400B is arranged between said protrusion 121 of said first element 1 and said first portion 21 of said second element 2.

In particular, said second tooth 400B is sized in such a way as to contact said protrusion 121 of said first element 1 and said first portion 21 of said second element 2.

In the first embodiment that is described, said pin 400 comprises two second teeth 400B, i.e. a pair of second teeth 400B.

The two second teeth 400B of said pair of second teeth 400B are aligned along a further axis perpendicular or substantially perpendicular to the longitudinal axis A of the pin 400.

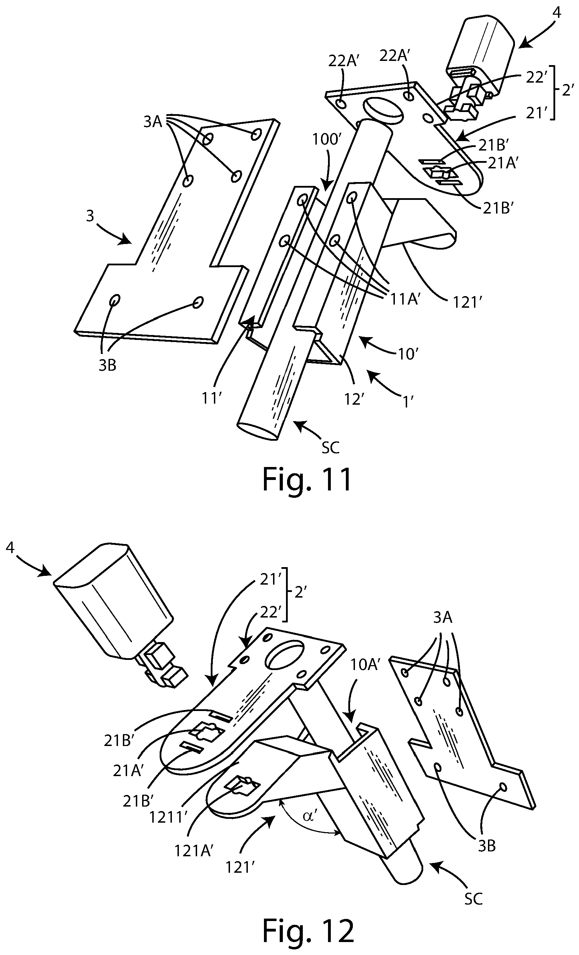

Figures 11 to 13 show a second embodiment of the blocking system.

In the second embodiment, the first element 1' and the second element 2' of the blocking system differ respectively from the first element 1 and from the second element 2 described in the first embodiment of the blocking system.

With reference to the first element 1' of the blocking system shown in the second embodiment, similarly to the first element 1 of the first embodiment described above, said first element 1' comprises a main body 10' which in turn comprises:
a cavity 10A' for receiving a portion of said steering column SC of said quad,
a slot 100' extending along a first surface 11' of said main body 10' to allow said portion of said steering column SC to be inserted said cavity 10A', and
a protrusion 121' protruding from a second surface 12' of said main body 10', different from said first surface 11', wherein said protrusion 121' is provided with a first opening 121A'.

With reference to the main body 10', said main body 10' is substantially a hollow tubular body.

The slot 100' arranged on the first surface 11' of the main body 10' allow the passage of a portion of the steering column SC inside said main body 10'.

In other words, the slot 100' extends along the entire first surface 11' of said main body 10', so as to divide said first surface 11' into two parts: a first part and a second part spaced apart from each other.

A plurality of through holes 11A' is arranged on said first surface 11'.

Each through hole 11A' of said plurality of through holes 11A' allows the insertion of a respective security pin (not shown) to also be inserted into a respective through hole 3A of the coupling element 3 described in detail below.

In other words, the first element 1' and the coupling element 3 are coupled to each other through said security pins, each of which is inserted into a respective through hole 3A of the third element as well as into a respective through hole 11A' of the first element 1'.

In particular, each through hole 11A' is a threaded hole and each security pin comprises a threaded end portion to be screwed on said threaded hole.

It is preferably that each security pin further comprises a head detachable from said threaded end portion.

In other words, after having inserted a security pin into the through hole 3A of the coupling element 3 and screwed said security pin on a respective through hole 11A' of the first element 1', it is possible to manually remove the head of said security pin, so as to prevent a criminal to easily decouple said first element 1 from the coupling element 3.

At least two through holes 11A' are arranged on the first surface 11' of the main body 10', in particular a through hole 11A' for each part of the first surface 11'.

In the second embodiment that is described, four through holes 11A' are arranged on the first surface 11', i.e. two through holes for each part of the first surface 11'.

In the second embodiment that is described, the second surface 12' of the main body 10' is opposite to the first surface 11' mentioned above.

The first opening 121A' serves to receive a pin 400 of a blocking device 4 described in detail below.

As mentioned, the first opening 121A' is formed in said protrusion 121'.

In the second embodiment that is described, the protrusion 121' is a single piece with the main body 10'.

However, it is not necessary that said protrusion 121' is a single piece with said main body 10'.

Differently from the first embodiment described above, in the second embodiment that is described, the first opening 121A' is arranged on a surface 1211' of said protrusion 121' of the first element 1' and said surface 1211' is arranged on a first plane forming a first angle α' equal to 90° with a second angle on which said second surface 12' is arranged.

In other words, the surface 1211' of the protrusion 121' on which the first opening 121A' is formed is not inclined with respect to the second surface 12' on which said protrusion 121' is arranged.

With reference to the second element 2' of the blocking system shown in the second embodiment, similarly to the second element 2 of the blocking system of the first embodiment described above, said second element 2' comprises a first portion 21' provided with a second opening 21A'.

Said second opening 21A' serves to receive a pin 400 of the blocking device 4 mentioned above.

In other words, the pin 400 of the blocking device 4 is to be inserted into the first opening 121A' of the first element 1' and into the second opening 21A' of the second element 2' in order to block the first element 1' and the second element 2' together.

Furthermore, the first portion 21' of the second element 2' is provided with at least one further slot 21B' for the insertion of a respective relief 41A of the blocking device 4 mentioned above.

In the second embodiment that is described, said first portion 21' is provided with two further slots 21B', each of which allows the insertion of a respective relief 41A of the blocking device 4.

In particular, said two further slots 21B' are spaced apart from each other and said second opening 21A' is arranged on said first portion 21' between said two further slots 21B'.

Advantageously, each further slot 21B' on the second element 2' also serves as a guide for the correct positioning of the blocking device 4.

In the second embodiment that is described, the first opening 121A' of the first element 1' and the second opening 21A' of the second element 2' have the same shape and size.

However, it is not necessary that said first opening 121A' and said second opening 21A' have the same shape and size.

Furthermore, said second element 2' comprises a second portion 22' intended to contact the portion of the handlebars S.

In order to couple the second element 2' to the portion of the handlebars S, said second element 2' is provided with at least one through hole 22A' for the passage of a pin (not shown) comprising a threaded end portion.

Said pin is one of the pins with which the quad is provided.

A security nut comprising a threaded end portion is screwed on said pin to block the second element 2' to said portion of said handlebars S.

It is preferable that the security nut has a head detachable from said threaded end portion.

In this way, after having screwed said security nut on said pin, it is possible to manually remove the head of said security nut, so as to prevent a criminal from easily decoupling said second element 2' from the handlebars S.

In the second embodiment that is described, in order to couple the second element 2' to the portion of the handlebars S, said second element 2' is provided with two through holes 22A' for the passage of a respective pin of the quad.

Differently from the first embodiment described above, in the second embodiment that is described, said first portion 21' and said second portion 22' are arranged on a same plane.

When the blocking system is in use, said first portion 21' is parallel to the surface 1211' of the protrusion 121' of the first element 1', in such a way that the second opening 21A' arranged on the first portion 21' of the second element 2' is parallel to the first opening 121A' of the first element 1'.

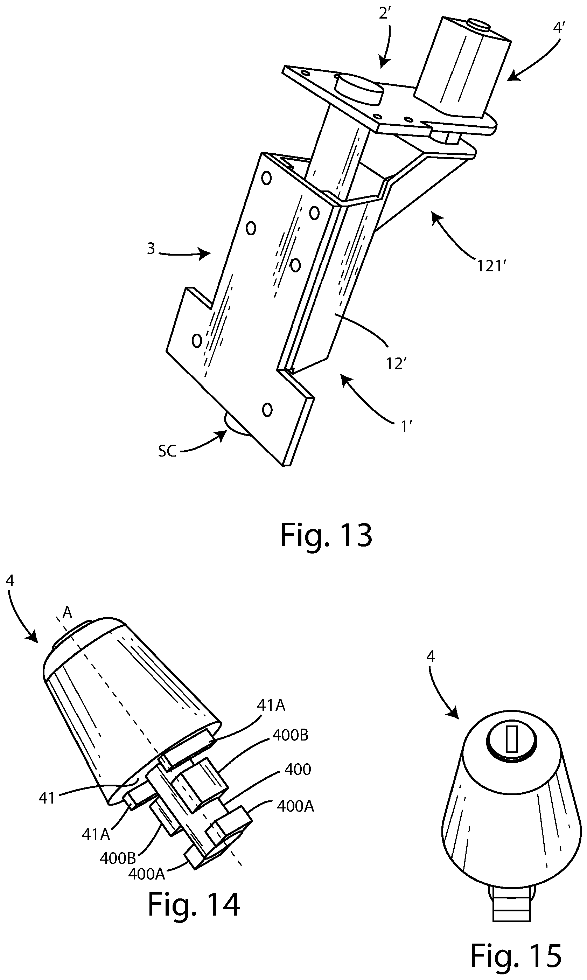

Figures 14 and 15 show a variant of the blocking device 4.

In particular, the body 40 of the blocking device 4 has a bell shape.

Advantageously, the bell shape of the body 40 of the blocking device complicates tampering of the blocking device 4 itself by a criminal.

### Advantages

Advantageously, the blocking system, object of the invention, has a high level of security against a possible tampering, despite having a simple mechanical structure.

A further advantage is given is given by the fact that the blocking system has a reduced bulk.

The present invention has been described for illustrative, but not limitative purposes, according to its preferred embodiments, but it is to be understood that variations and/or modifications can be carried out by a skilled in the art, without departing from the scope thereof, as defined according to enclosed claims.

## Claims

1. Blocking system for blocking a steering column (SC) of a quad, comprising:
- a first element (1,1') shaped to surround a portion of said steering column (SC), wherein said first element (1,1') comprises a main body (10,10') comprising:
a cavity (10A,10A') for receiving a portion of said steering column (SC) of said quad,
a slot (100,100') extending along a first surface (11,11') of said main body (10,10') to allow said portion of said steering column (SC) to be inserted said cavity (10A, 10A'), and
a protrusion (121,121') protruding from a second surface (12,12') of said main body (10,10'), different from said first surface (11,11'), wherein said protrusion (121,121') is provided with a first opening (121A,121A'),
- a second element (2,2') couplable to a portion of a handlebars (S) of said quad, wherein said second element (2,2') comprises a first portion (21,21') provided with a second opening (21A,21A'),
- a coupling element (3) for rigidly coupling said first element (1,1') with a frame portion of said quad, so that said first element (1,1') is blocked in position with respect to said frame portion,
- a blocking device (4) for blocking said second element (2,2') to said first element (1,1'), wherein said blocking device (4) comprises:
a body (40),
a pin (400) extending outwards from an end surface (41) of said body (40) and is shaped to be inserted into said first opening (121A,121A') of said first element (1,1') and into said second opening (21A,21A') of said second element (2,2'), wherein said pin (400) has a longitudinal axis (A), **characterised in that**
said blocking system
comprises at least one first tooth (400A) integral with said pin (400), and is rotable around said longitudinal axis (A) with respect to said body (40) in such a way that said first tooth (400A) rotates between a first position, in which said pin (400) is inserted into said first opening (121A,121A') of said first element (1,1') and into said second opening (21A,21A') of said second element (2,2') but said first tooth (400A) does not block said second element (2,2') to said first element (1,1'), and a second position, in which said pin (400) is inserted into said first opening (121A,121A') of said first element (1,1') and into said second opening (21A,21A') of said second element (2,2') and said first tooth (400A) blocks said second element (2,2') to said first element (1,1').

2. Blocking system according to claim 1, wherein
said first portion (21,21') of said second element (2,2') is provided with at least one a further slot (21B,21B'), and
wherein
the end surface (41) of the body (40) of said blocking device (4) is provided with at least one relief (41A) shaped to be inserted in said further slot (21B,21B').

3. Blocking system according to claim 1, wherein
said first portion (21,21') of said second element (2,2') is provided with two further slots (21B,21B') spaced each other and said second opening (21A,21A') is arranged on said first portion (21,21') between said two further slots (21B,21B'), and
wherein
said end surface (41) of said body (40) of said blocking device (4) is provided with two reliefs (41A), spaced each other, each of which is shaped to be inserted in a respective further slot (21B,21B'), said pin (400) comprising an end arranged on said end surface (41) between said two reliefs (41A).

4. Blocking system according to any one of the preceding claims, wherein said first opening (121A,121A') of said first element (1,1') and said second opening (21A,21A') of said second element (2,2') have the same shape and the same size.

5. Blocking system according to any one of the preceding claims, wherein
the first surface (11,11') of the first element (1,1') is provided with a plurality of threaded through holes (11A), and
said coupling element (3) is provided with a plurality of through holes (3A), wherein the through holes (3A) of said plurality of through holes (3A) are arranged in such a way that, when the blocking is in use, each through hole (3A) of said plurality of through holes (3A) of said coupling element (3) is overlayed on a respective threaded through hole (11A) of said first surface (11,11') of said first element (1,1'), and
wherein
said blocking system comprises a plurality of security pins to fix said coupling element (3) to said first element (1,1'), wherein each security pin of said plurality of security pins comprises a threaded end portion and is to be inserted in a respective couple of holes formed by a through hole (3A) of said plurality of through holes (3A) of said coupling element (3) and a threaded through hole (11A) of the first (11,11') of said first element (1,1').

6. Blocking system according to the preceding claim, wherein each security pin of said plurality of security pins comprises a head detachable from said threaded end portion.

7. Blocking system according to any one of the preceding claims, wherein
said second element (2,2') comprises a second portion (22,22') intended to contact a portion of the handlebars (S) and said second portion (22,22') is provided with at least one through hole (22A,22A') for the passage of a pin of said quad comprising a threaded end portion,
wherein
said blocking system comprises a respective security nut for each through hole (22A,22A') of the second element (2,2'), for fixing said second element (2,2') to the portion of the handlebars (S), wherein each security nut comprises a threaded end portion to be screwed on said pin of said quad.

8. Blocking system according to the preceding claim, wherein each security nut comprises a head detachable from said threaded end portion.

9. Blocking system according to claim 5 or 6, wherein
said coupling element (3) is provided with two further through holes (3B), wherein said further through holes (3B) are arranged in such a way that, when the blocking system is in use, each further through hole (3B) is overlayed a respective hole arranged on said frame portion, so that a respective pin of the quad pass through a hole on said frame portion and a further through hole (3B), said pin of said quad comprising a threaded end portion,
wherein
said blocking system comprises a respective further security nut for each further through hole (3B), for fixing said coupling element (3) to said frame portion of said quad, wherein each further security nut comprises a threaded end portion to be screwed on said pin of said quad.

10. Blocking system according to the preceding claim according to the preceding claim, wherein each further security nut comprises a head detachable from said threaded end portion.

11. Blocking system according to any one of the claims 1-10, wherein
said first opening (121A) is arranged on a surface (1211) of said protrusion (121) of said first element (1) and said surface (1211) is arranged on a first plane forming a first angle (α) greater than 0° and less than 90° with a second plane on which said second surface (12) is arranged.

12. Blocking system according to any one the claims 1-10, wherein
said first opening (121A') is arranged on a surface (1211') of said protrusion (121') of said first element (1') and said surface (1211') is arranged on a first plane forming a first angle (α') equal to 90° with a second plane on which said second surface (12') is arranged.

13. Blocking system according to any one of the preceding claims, wherein
the pin (400) of said blocking device (4) comprises at least one second tooth (400B) integral with said pin (400), wherein said second tooth (400B) is arranged between said end surface (41) of the body (40) of the blocking device (4) and said first tooth (400A), and
wherein
when said blocking system is in use, said second tooth (400B) is arranged between said protrusion (121,121') of said first element (1,1') and said first portion (21,21') of said second element (2,2').

14. Blocking system according to the preceding claim, wherein said second tooth (400B) is dimensioned in such a way as to contact said protrusion (121,121') of said first element (1,1') and said first portion (21,21') of said second element (2,2').

15. Blocking system according to any one of the preceding claims, wherein the body (40) of said blocking device (4) has a bell shape.

## Patentansprüche

1. Sperrsystem zum Blockieren einer Lenksäule (SC) eines Quads, umfassend:
- ein erstes Element (1, 1'), das so geformt ist, dass es einen Abschnitt der Lenksäule (SC) umgibt, wobei das erste Element (1, 1') einen Hauptkörper (10, 10') umfasst, der Folgendes umfasst:
einen Hohlraum (10A, 10A') zur Aufnahme eines Teils der Lenksäule (SC) des Quad,
einen Schlitz (100, 100'), der sich entlang einer ersten Oberfläche (11, 11') des Hauptkörpers (10, 10') erstreckt, damit der Abschnitt der Lenksäule (SC) in den Hohlraum (10A, 10A') eingeführt werden kann, und
einen Vorsprung (121, 121'), der von einer zweiten Oberfläche (12, 12') des Hauptkörpers (10,10'), die sich von der ersten Oberfläche (11,11') unterscheidet, vorsteht, wobei der Vorsprung (121, 121') mit einer ersten Öffnung (121A, 121A') versehen ist,
- ein zweites Element (2, 2'), das mit einem Abschnitt einer Lenkstange (S) des Quads verbunden werden kann, wobei das zweite Element (2, 2') einen ersten Abschnitt (21, 21') umfasst, der mit einer zweiten Öffnung (21A, 21A') versehen ist,
- ein Kupplungselement (3) zum starren Verbinden des ersten Elements (1, 1') mit einem Rahmenteil des Quad, so dass das erste Element (1, 1') in seiner Position in Bezug auf den Rahmenteil blockiert wird,
- eine Blockiervorrichtung (4) zum Blockieren des zweiten Elements (2, 2') mit dem ersten Element (1, 1'), wobei die Blockiervorrichtung (4) umfasst:
einen Körper (40),
einen Stift (400), der sich von einer Endfläche (41) des Körpers (40) nach außen erstreckt und so geformt ist, dass er in die erste Öffnung (121A, 121A') des ersten Elements (1, 1') und in die zweite Öffnung (21A, 21A') des zweiten Elements (2, 2') eingesetzt werden kann, wobei der Stift (400) eine Längsachse (A) hat, **dadurch gekennzeichnet, dass**
besagtes Sperrsystem
mindestens einen ersten Zahn (400A) aufweist, der einstückig mit dem Stift (400) ausgebildet ist und um die Längsachse (A) in Bezug auf den Körper (40) derart drehbar ist, dass der erste Zahn (400A) sich zwischen einer ersten Position, in der der Stift (400) in die erste Öffnung (121A, 121A') des ersten Elements (1, 1') und in die zweite Öffnung (21A, 21A') des zweiten Elements (2,2') eingeführt ist, aber der erste Zahn (400A) das zweite Element (2, 2') gegenüber dem ersten Element (1, 1') nicht blockiert, und eine zweite Position, in der der Stift (400) in die erste Öffnung (121A, 121A') des ersten Elements (1, 1') und in die zweite Öffnung (21A, 21A') des zweiten Elements (2, 2') eingeführt ist und der erste Zahn (400A) das zweite Element (2, 2') gegenüber dem ersten Element (1, 1') blockiert.

2. Sperrsystem nach Anspruch 1, wobei
der erste Abschnitt (21, 21') des zweiten Elements (2, 2') mit mindestens einem weiteren Schlitz (21B, 21B') versehen ist, und
wobei
die Endfläche (41) des Körpers (40) der Blockiervorrichtung (4) mit mindestens einer Aussparung (41A) versehen ist, die so geformt ist, dass sie in den weiteren Schlitz (21B, 21B') eingeführt werden kann.

3. Sperrsystem nach Anspruch 1, wobei
der erste Abschnitt (21, 21') des zweiten Elements (2, 2') mit zwei weiteren Schlitzen (21B, 21B') versehen ist, die voneinander beabstandet sind, und die zweite Öffnung (21A, 21A) an dem ersten Abschnitt (21, 21') zwischen den beiden weiteren Schlitzen (21B, 21B') angeordnet ist, und
wobei
die Endfläche (41) des Körpers (40) der Blockiervorrichtung (4) mit zwei Reliefs (41A) versehen ist, die voneinander beabstandet sind und von denen jedes so geformt ist, dass es in einen entsprechenden weiteren Schlitz (21B, 21B') eingesetzt werden kann; wobei der Stift (400) ein Ende umfasst, das an der Endfläche (41) zwischen den beiden Reliefs (41A) angeordnet ist.

4. Sperrsystem nach einem der vorhergehenden Ansprüche, wobei die erste Öffnung (121A, 121A') des ersten Elements (1, 1') und die zweite Öffnung (21A, 21A') des zweiten Elements (2, 2') die gleiche Form und die gleiche Größe haben.

5. Sperrsystem nach einem der vorstehenden Ansprüche, wobei
die erste Oberfläche (11, 11') des ersten Elements (1,1') mit einer Vielzahl von Gewindedurchgangslöchern (11A) versehen ist, und
das Kupplungselement (3) mit einer Vielzahl von Durchgangslöchern (3A) versehen ist, wobei die Durchgangslöcher (3A) der Vielzahl von Durchgangslöchern (3A) so angeordnet sind, dass, wenn die Blockierung in Gebrauch ist, jedes Durchgangsloch (3A) der Vielzahl von Durchgangslöchern (3A) des Kupplungselements (3) auf einem jeweiligen mit Gewinde versehenen Durchgangsloch (11A) der ersten Oberfläche (11, 11') des ersten Elements (1, 1') überlagert ist, und
wobei
das Sperrsystem eine Vielzahl von Sicherheitsstiften umfasst, um das Kupplungselement (3) an dem ersten Element (1, 1') zu befestigen, wobei jeder Sicherheitsstift der Vielzahl von Sicherheitsstiften einen mit einem Gewinde versehenen Endabschnitt umfasst und in ein entsprechendes Paar von Löchern einzuführen ist, das durch ein Durchgangsloch (3A) der Vielzahl von Durchgangslöchern (3A) des Kupplungselements (3) und ein mit einem Gewinde versehenes Durchgangsloch (11A) des ersten (11, 11') des ersten Elements (1, 1') gebildet wird.

6. Sperrsystem nach dem vorhergehenden Anspruch, wobei jeder Sicherheitsstift der Vielzahl von Sicherheitsstiften einen Kopf aufweist, der von dem mit einem Gewinde versehenen Endabschnitt abnehmbar ist.

7. Sperrsystem nach einem der vorstehenden Ansprüche, wobei
das zweite Element (2, 2') einen zweiten Abschnitt (22, 22') umfasst, der dazu bestimmt ist, einen Abschnitt der Lenkstange (S) zu berühren, und der zweite Abschnitt (22, 22') mit mindestens einem Durchgangsloch (22A, 22A') für den Durchgang eines Stifts des Vierers versehen ist, der einen mit Gewinde versehenen Endabschnitt umfasst,
wobei
das Sperrsystem eine jeweilige Sicherheitsmutter für jedes Durchgangsloch (22A, 22A') des zweiten Elements (2, 2') umfasst, um das zweite Element (2, 2') an dem Abschnitt des Lenkers (S) zu befestigen, wobei jede Sicherheitsmutter einen mit Gewinde versehenen Endabschnitt umfasst, der auf den Stift des Vierers aufzuschrauben ist.

8. Sperrsystem nach dem vorhergehenden Anspruch, wobei jede Sicherheitsmutter einen Kopf aufweist, der von dem mit Gewinde versehenen Endabschnitt abnehmbar ist.

9. Sperrsystem nach Anspruch 5 oder 6, wobei
das Kupplungselement (3) mit zwei weiteren Durchgangslöchern (3B) versehen ist, wobei die weiteren Durchgangslöcher (3B) so angeordnet sind, dass, wenn das Sperrsystem in Gebrauch ist, jedes weitere Durchgangsloch (3B) ein entsprechendes Loch überlagert, das auf dem Rahmenteil angeordnet ist, so dass ein entsprechender Bolzen des Vierers durch ein Loch auf dem Rahmenteil und ein weiteres Durchgangsloch (3B) hindurchgeht, wobei der Bolzen des Vierers einen Gewindeendabschnitt umfasst,
wobei
das Sperrsystem eine jeweilige weitere Sicherungsmutter für jedes weitere Durchgangsloch (3B) umfasst, um das Kupplungselement (3) an dem Rahmen des Vierseiters zu befestigen, wobei jede weitere Sicherungsmutter einen mit Gewinde versehenen Endabschnitt umfasst, der auf den Stift des Vierseiters geschraubt wird.

10. Sperrsystem nach dem vorhergehenden Anspruch, wobei jede weitere Sicherheitsmutter einen Kopf aufweist, der von dem Gewindeendabschnitt abnehmbar ist.

11. Sperrsystem nach einem der Ansprüche 1-10, wobei die erste Öffnung (121A) auf einer Fläche (1211) des Vorsprungs (121) des ersten Elements (1) angeordnet ist und die Fläche (1211) in einer ersten Ebene angeordnet ist, die einen ersten Winkel (α) größer als 0° und kleiner als 90° mit einer zweiten Ebene bildet, in der die zweite Fläche (12) angeordnet ist.

12. Sperrsystem nach einem der Ansprüche 1-10, wobei die erste Öffnung (121A') auf einer Oberfläche (1211') des Vorsprungs (121') des ersten Elements (1') angeordnet ist und die Oberfläche (1211') auf einer ersten Ebene angeordnet ist, die einen ersten Winkel (α') gleich 90° mit einer zweiten Ebene bildet, auf der die zweite Oberfläche (12') angeordnet ist.

13. Sperrsystem nach einem der vorstehenden Ansprüche, wobei
der Stift (400) der Blockiervorrichtung (4) mindestens einen zweiten Zahn (400B) aufweist, der mit dem Stift (400) einstückig ist, wobei der zweite Zahn (400B) zwischen der Endfläche (41) des Körpers (40) der Blockiervorrichtung (4) und dem ersten Zahn (400A) angeordnet ist, und
wobei
wenn das Sperrsystem in Gebrauch ist, der zweite Zahn (400B) zwischen dem Vorsprung (121, 121') des ersten Elements (1, 1') und dem ersten Abschnitt (21, 21') des zweiten Elements (2, 2') angeordnet ist.

14. Sperrsystem nach dem vorhergehenden Anspruch, wobei der zweite Zahn (400B) so bemessen ist, dass er den Vorsprung (121, 121') des ersten Elements (1, 1') und den ersten Abschnitt (21, 21') des zweiten Elements (2, 2') berührt.

15. Sperrsystem nach einem der vorstehenden Ansprüche, wobei der Körper (40) der Blockiervorrichtung (4) die Form einer Glocke hat.

## Revendications

1. Système de blocage pour bloquer une colonne de direction (SC) d'un quad, comprenant:
- un premier élément (1, 1') conçu pour entourer une partie de ladite colonne de direction (SC), dans lequel ledit premier élément (1, 1') comprend un corps principal (10, 10') comprenant:
une cavité (10A, 10A') destinée à recevoir une partie de ladite colonne de direction (SC) dudit quad,
une fente (100, 100') s'étendant le long d'une première surface (11, 11') dudit corps principal (10, 10') pour permettre à ladite partie de ladite colonne de direction (SC) d'être insérée dans ladite cavité (10A, 10A'), et
une saillie (121, 121') faisant saillie à partir d'une deuxième surface (12, 12') dudit corps principal (10, 10'), différente de ladite première surface (11, 11'), dans laquelle ladite saillie (121, 121') est pourvue d'une première ouverture (121A, 121A'),
- un second élément (2, 2') pouvant être couplé à une partie du guidon (S) dudit quad, dans lequel ce second élément (2, 2') comprend une première partie (21, 21') pourvue d'une seconde ouverture (21A, 21A'),
- un élément de couplage (3) pour coupler rigidement ledit premier élément (1, 1') avec une partie du cadre dudit quad, de sorte que ledit premier élément (1, 1') est bloqué en position par rapport à ladite partie du cadre,
- un dispositif de blocage (4) pour bloquer ledit second élément (2, 2') audit premier élément (1, 1'), dans lequel ledit dispositif de blocage (4) comprend:
un corps (40),
une goupille (400) s'étendant vers l'extérieur à partir d'une surface d'extrémité (41) dudit corps (40) et est formée pour être insérée dans ladite première ouverture (121A, 121A') dudit premier élément (1, 1') et dans ladite seconde ouverture (21A, 21A') dudit second élément (2, 2'), dans laquelle ladite goupille (400) a un axe longitudinal (A), **caractérisé par le fait que**
ledit système de blocage
comprend au moins une première dent (400A) solidaire de ladite goupille (400), et est rotative autour dudit axe longitudinal (A) par rapport audit corps (40) de telle sorte que ladite première dent (400A) tourne entre une première position, dans laquelle ladite goupille (400) est insérée dans ladite première ouverture (121A, 121A') dudit premier élément (1, 1') et dans ladite seconde ouverture (21A, 21A') dudit second élément (2, 2'), mais ladite première dent (400A) ne bloque pas ledit second élément (2, 2') audit premier élément (1, 1'), et une seconde position, dans laquelle ladite goupille (400) est insérée dans ladite première ouverture (121A, 121A') dudit premier élément (1, 1') et dans ladite seconde ouverture (21A, 21A') dudit second élément (2, 2') et ladite première dent (400A) bloque ledit second élément (2, 2') audit premier élément (1, 1').

2. Système de blocage selon la revendication 1, dans lequel
ladite première partie (21, 21') dudit second élément (2, 2') est pourvue d'au moins une autre fente (21B, 21B'), et
dans lequel
la surface d'extrémité (41) du corps (40) dudit dispositif de blocage (4) est pourvue d'au moins un relief (41A) conçu pour être inséré dans ladite autre fente (21B, 21B').

3. Système de blocage selon la revendication 1, dans lequel
ladite première partie (21, 21') dudit second élément (2, 2') est pourvue de deux autres fentes (21B, 21B') espacées l'une de l'autre et ladite seconde ouverture (21A, 21A) est disposée sur ladite première partie (21, 21') entre lesdites deux autres fentes (21B, 21B'), et
dans lequel
ladite surface d'extrémité (41) dudit corps (40) dudit dispositif de blocage (4) est pourvue de deux reliefs (41A), espacés l'un de l'autre, dont chacun est formé pour être inséré dans une autre fente respective (21B, 21B'); ladite goupille (400) comprend une extrémité disposée sur ladite surface d'extrémité (41) entre lesdits deux reliefs (41A).

4. Système de blocage selon l'une quelconque des revendications précédentes, dans lequel ladite première ouverture (121A, 121A') dudit premier élément (1, 1') et ladite seconde ouverture (21A, 21A') dudit second élément (2, 2') ont la même forme et la même taille.

5. Système de blocage selon l'une quelconque des revendications précédentes, dans lequel
la première surface (11, 11') du premier élément (1,1') est pourvue d'une pluralité de trous filetés traversants (11A), et
ledit élément de couplage (3) est pourvu d'une pluralité de trous traversants (3A), les trous traversants (3A) de ladite pluralité de trous traversants (3A) étant disposés de telle sorte que, lorsque le blocage est utilisé, chaque trou traversant (3A) de ladite pluralité de trous traversants (3A) dudit élément de couplage (3) est superposé à un trou traversant fileté respectif (11A) de ladite première surface (11, 11') dudit premier élément (1, 1'), et
dans lequel
ledit système de blocage comprend une pluralité de goupilles de sécurité pour fixer ledit élément de couplage (3) audit premier élément (1, 1'), chaque goupille de sécurité de ladite pluralité de goupilles de sécurité comprenant une partie terminale filetée et devant être insérée dans un couple respectif de trous formés par un trou traversant (3A) de ladite pluralité de trous traversants (3A) dudit élément de couplage (3) et un trou traversant fileté (11A) du premier (11, 11') dudit premier élément (1, 1').

6. Système de blocage selon la revendication précédente, dans lequel chaque goupille de sécurité de ladite pluralité de goupilles de sécurité comprend une tête détachable de ladite partie d'extrémité filetée.

7. Système de blocage selon l'une quelconque des revendications précédentes,
dans lequel
ledit second élément (2, 2') comprend une seconde portion (22, 22') destinée à entrer en contact avec une partie du guidon (S) et ladite seconde portion (22, 22') est pourvue d'au moins un trou traversant (22A, 22A') pour le passage d'une goupille dudit quad comprenant une partie terminale filetée,
dans lequel
ledit système de blocage comprend un écrou de sécurité respectif pour chaque trou de passage (22A, 22A) du second élément (2, 2), pour fixer ledit second élément (2, 2') à la partie du guidon (S), où chaque écrou de sécurité comprend une partie d'extrémité filetée à visser sur ladite goupille dudit quad.

8. Système de blocage selon la revendication précédente, dans lequel chaque écrou de sécurité comprend une tête détachable de la partie terminale filetée.

9. Système de blocage selon la revendication 5 ou 6, dans lequel
ledit élément de couplage (3) est pourvu de deux autres trous de passage (3B), lesdits autres trous de passage (3B) étant disposés de telle sorte que, lorsque le système de blocage est utilisé, chaque autre trou de passage (3B) est superposé à un trou respectif disposé sur ladite partie du cadre, de sorte qu'une broche respective du quadruple passe à travers un trou sur ladite partie du cadre et un autre trou de passage (3B), ladite broche dudit quadruple comprenant une partie terminale filetée,
dans lequel
ledit système de blocage comprend un autre écrou de sécurité respectif pour chaque autre trou de passage (3B), pour fixer ledit élément de couplage (3) à ladite partie du cadre dudit quad, où chaque autre écrou de sécurité comprend une partie d'extrémité filetée à visser sur ladite broche dudit quad.

10. Système de blocage selon la revendication précédente selon la revendication précédente, dans lequel chaque écrou de sécurité supplémentaire comprend une tête détachable de ladite partie terminale filetée.

11. Système de blocage selon l'une des revendications 1-10, dans lequel
ladite première ouverture (121A) est disposée sur une surface (1211) de ladite saillie (121) dudit premier élément (1) et ladite surface (1211) est disposée sur un premier plan formant un premier angle (α) supérieur à 0° et inférieur à 90° avec un second plan sur lequel est disposée ladite seconde surface (12).

12. Système de blocage selon l'une des revendications 1-10, dans lequel
ladite première ouverture (121A') est disposée sur une surface (1211') de ladite saillie (121') dudit premier élément (1') et ladite surface (1211') est disposée sur un premier plan formant un premier angle (α') égal à 90° avec un second plan sur lequel est disposée ladite seconde surface (12').

13. Système de blocage selon l'une quelconque des revendications précédentes, dans lequel
la broche (400) dudit dispositif de blocage (4) comprend au moins une deuxième dent (400B) intégrée à ladite broche (400), dans laquelle ladite deuxième dent (400B) est disposée entre ladite surface d'extrémité (41) du corps (40) du dispositif de blocage (4) et ladite première dent (400A), et
dans lequel
lorsque ledit système de blocage est utilisé, ladite seconde dent (400B) est disposée entre ladite saillie (121, 121') dudit premier élément (1, 1') et ladite première portion (21, 21') dudit second élément (2, 2').

14. Système de blocage selon la revendication précédente, dans lequel ladite deuxième dent (400B) est dimensionnée de manière à venir en contact avec ladite protubérance (121, 121') dudit premier élément (1, 1') et ladite première portion (21, 21') dudit deuxième élément (2, 2').

15. Système de blocage selon l'une quelconque des revendications précédentes,
dans lequel le corps (40) dudit dispositif de blocage (4) a une forme de cloche.
